# EUROPÄISCHE PATENTANMELDUNG

(11) **EP 2 084 964 A1**
(43) Veröffentlichungstag der Anmeldung: **05.08.2009**
(21) Anmeldenummer: 08012355.7
(22) Anmeldetag: 09.07.2008
(51) Int. Cl.: A01M 7/00

(54) **Spritzeinrichtung**

(30) Priorität: 31.01.2008 DE 102008006888
(71) Anmelder: Amazonen-Werke H. Dreyer GmbH & Co. KG, 49205 Hasbergen (DE)
(72) Erfinder: Ehlen, Volker, 49205 Hasbergen (DE)

(57) **Zusammenfassung**

Spritzeinrichtung zum Ausbringen von Flüssigkeiten, insbesondere für landwirtschaftliche Zwecke, mit einer an einem Fahrzeug (2) zugeordneten Spritzbalkenanordnung (7) mit zumindest einer quer zur Fahrtrichtung verlaufenden Flüssigkeitsleitung, die in Abständen mit Spritzdüsen versehen ist, wobei den Spritzdüsen über die zumindest eine Flüssigkeitsleitung (8) zumindest eine die auszubringende Flüssigkeit jeweils von zumindest einer die Trägerflüssigkeit aus einem Flüssigkeitstank (5) fördernden und den Spritzdruck erzeugenden Dosierpumpe (6) und zumindest einer zumindest ein Wirkstoffmittel fördernden und in die Trägerflüssigkeit in dosierender Weise einspeisenden Pumpe (15) in einstellbarer Menge zuführbar ist, wobei ein Vormischbehälter (3) zum Vorverdünnen und/oder Auflösen des zumindest eines Wirkstoffmittels mit und/oder in Verdünnungsflüssigkeit vor dem Ausbringen der Flüssigkeiten vorgesehen ist, dass der Vormischbehälter (3) über zumindest eine Leitung (14) mit der das zumindest vor dem Ausbringen der Flüssigkeiten eine vorverdünnte Wirkstoffmittel in die Trägerflüssigkeit einspeisenden Dosierpumpe (15) verbunden ist. Um hier auf einfache Weise Abhilfe zu schaffen, ist vorgesehen, dass der Vormischbehälter (3) beabstandet vom Flüssigkeitstank (5) angeordnet ist.

## Beschreibung

Die Erfindung betrifft eine Spritzeinrichtung gemäß des Oberbegriffes des Patentanspruches 1.

Eine derartige Spritzeinrichtung in der Patentanmeldung DE 10 2007 038 636.4 beschrieben. Diese Spritzeinrichtung weist einen Flüssigkeitstank zur Aufnahme der Trägerflüssigkeit, in der Regel Wasser, und einen weiteren Behälter, nämlich den Vormischbehälter zum Vorverdünnen des auszubringenden Wirkstoffmittels mit Trägerflüssigkeit, auf. Gemäß einer Spritzeinrichtung Patentanmeldung DE 10 2007 038 636.4 ist der Vormischbehälter auf der Vorderseite einer Feldspritze an derem Flüssigkeitstank seitlich angebracht. Diese Anbringung ist nicht in allen Fällen vorteilhaft, insbesondere wenn eine größere Menge vorverdünntem Wirkstoffmittel von der Spritzeinrichtung in einem Vormischbehälter angemischt und mitgeführt werden soll.

Der Erfindung liegt die Aufgabe zugrunde, hier auf einfache Weise Abhilfe zu schaffen.

Diese Aufgabe wird erfindungsgemäß dadurch gelöst, dass der Vormischbehälter beabstandet vom Flüssigkeitstank angeordnet ist. Infolge dieser Maßnahmen kann der Vormischbehälter unabhängig vom Flüssigkeitstank an einer vorteilhaften Position angeordnet werden.

In einer bevorzugten Ausführungsform ist vorgesehen, dass der Flüssigkeitstank einerseits im Heckbereich eines die Spritzeinrichtung ziehenden oder tragenden Schleppers und der Vormischbehälter andererseits im Frontbereich dieses Schleppers angeordnet ist. Hiermit ist es einfach möglich, einen zusätzlichen Behälter als Vormischbehälter vorzusehen, der im Frontbereich des Schleppers angeordnet ist. Somit kann also eine größere Menge vorverdünnter Wirkstoffmittel in einfacher Weise mitgenommen werden. Auch können für verschiedene Einsatzfälle verschiedene Vormischbehälter im Frontbereich des Schleppers angeordnet werden, die dem Einsatzzweck angepasst sind, und zwar hinsichtlich ihrer Größe und der evtl. kontaminierten Vormischbehälter.

In einfacher Weise ist gemäß der Erfindung der Vormischbehälter als Fronttank ausgebildet.

Weitere Einzelheiten der Erfindung sind der Beispielsbeschreibung und der Zeichnung zu entnehmen. Diese zeigt

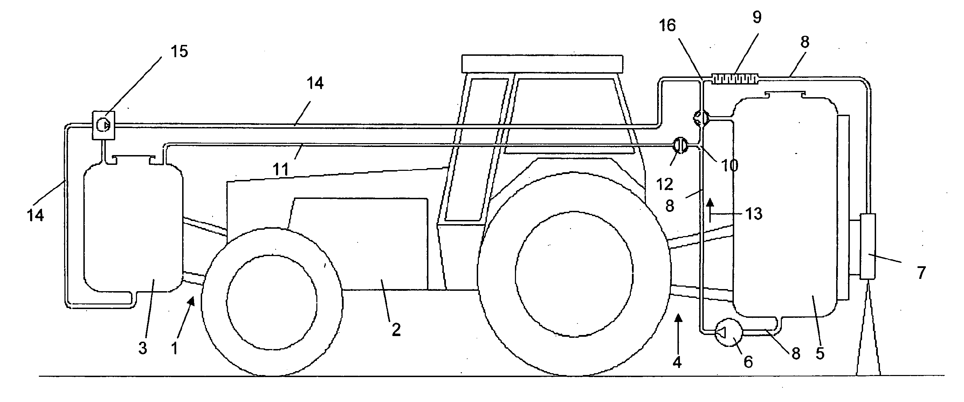

Die Spritzeinrichtung, bestehend aus an einem Schlepper angebauten Fronttank und Flüssigkeitstank mit einem Flüssigkeitsplan entsprechend der Fig. 6 der Patentanmeldung 10 2007 038 636.4 in schematischer Darstellung.

Die Spritzvorrichtung besteht aus dem an der Frontseite 1 des Schleppers 2 angebauten Fronttank 3 und dem im Heck 4 des Schleppers 2 angebauten Flüssigkeitstank 5 mit entsprechend zugeordneten Flüssigkeitsleitungen und Absperrhähnen und Ventilen. Der Fronttank 3 ist als Vormischbehälter ausgebildet, während der im Heck des Schleppers 2 angeordnete Flüssigkeitstank 5 zur Aufnahme von Trägerflüssigkeit, in der Regel Wasser vorgesehen ist. In dem als Fronttank 3 ausgebildeten Vormischbehälter werden die auszubringende Wirkstoffmittel in der entsprechend der Patentanmeldung DE 10 2007 038 636.4 beschriebenen Weise angemischt.

Die Spritzvorrichtung weist, wie bereits erwähnt den Flüssigkeitstank 5 zur Aufnahme von Trägerflüssigkeit, die die Flüssigkeit fördernde Pumpe 6, eine zum Spritzbalken 7, der mit Spritzdüsen ausgestaltet ist, führenden Leitung 8, in welcher die Mischeinrichtung 9 angeordnet ist, auf. Die Spritzdüsen sind beabstandet zueinander an dem Spritzbalken 7 angeordnet.

Des Weiteren besitzt die Spritzvorrichtung, wie erwähnt, den im Frontbereich 1 des Schleppers 2 angeordneten Vormischbehälter 3 auf, der über eine Abzweigung 10 mit der Flüssigkeit fördernden Pumpe 6 und Trägerflüssigkeit führenden Leitung 8 über die Leitung 11 verbunden ist. Diese Leitung 11 mündet im Vormischbehälter 3 aus. In dieser Leitung 11 ist der Absperrhahn 12 angeordnet. Zwischen dem Vormischbehälter 3 und der von der Flüssigkeit fördernden Pumpe 6 zu dem Spritzbalken 7 führenden Leitung 8 ist in Durchflussrichtung 13 gesehen, ein in diese Leitung 8 vor der Mischeinrichtung 9 einmündender Leitung 14 angeordnet. In dieser Leitung 14, die vom Vormischbehälter 3 zu der von der Pumpe 6 zum Spritzbalken 7 führenden Leitung 8 führt, ist eine Dosierpumpe 15 angeordnet. In der von der Pumpe 6 zum Spritzbalken 7 führenden Leitung 8 ist vor der Einmündung der vom Vormischbehälter 3 kommenden Leitung 14 eine nicht dargestellte Dosierarmatur angeordnet. Die Leitung 14 mündest in Durchflussrichtung 13 der Trägerflüssigkeitsleitung 8 gesehen hinter der in der Trägerflüssigkeitsleitung 8 angeordneten Pumpe 6 in die Trägerflüssigkeitsleitung 8 an der Stelle 16 vor der Mischeinrichtung 9 ein. Die Funktionsweise dieser Spritzvorrichtung ist entsprechend in den Fig. 5 und 6 dargestellten Flüssigkeitsplan der Patentanmeldung DE 10 2007 038 636.4, worauf hier verwiesen wird.

## Patentansprüche

1. Spritzeinrichtung zum Ausbringen von Flüssigkeiten, insbesondere für landwirtschaftliche Zwecke, mit einer an einem Fahrzeug zugeordneten Spritzbalkenanordnung mit zumindest einer quer zur Fahrtrichtung verlaufenden Flüssigkeitsleitung, die in Abständen mit Spritzdüsen versehen ist, wobei den Spritzdüsen über die zumindest eine Flüssigkeitsleitung zumindest eine die auszubringende Flüssigkeit jeweils von zumindest einer die Trägerflüssigkeit aus einem Flüssigkeitstank fördernden und den Spritzdruck erzeugenden Dosierpumpe und zumindest einer zumindest ein Wirkstoffmittel fördernden und in die Trägerflüssigkeit in dosierender Weise einspeisenden Pumpe in einstellbarer Menge zuführbar ist, wobei ein Vormischbehälter zum Vorverdünnen und/oder Auflösen des zumindest eines Wirkstoffmittels mit und/oder in Verdünnungsflüssigkeit vor dem Ausbringen der Flüssigkeiten vorgesehen ist, dass der Vormischbehälter über zumindest eine Leitung mit der das zumindest vor dem Ausbringen der Flüssigkeiten eine vorverdünnte Wirkstoffmittel in die Trägerflüssigkeit einspeisenden Dosierpumpe verbunden ist, **dadurch gekennzeichnet, dass** der Vormischbehälter (3) beabstandet vom Flüssigkeitstank (5) angeordnet ist.

2. Spritzeinrichtung nach Anspruch 1, **dadurch gekennzeichnet, dass** der Flüssigkeitstank (5) einerseits im Heckbereich (4) eines die Spritzeinrichtung ziehenden oder tragenden Schleppers (2) und der Vormischbehälter (3) andererseits im Frontbereich dieses Schleppers (2) angeordnet ist.

3. Spritzeinrichtung nach Anspruch 2, **dadurch gekennzeichnet, dass** der Vormischbehälter (3) als Fronttank ausgebildet ist.
